# EUROPÄISCHE PATENTSCHRIFT

(11) **EP 2 436 336 B1**
(45) Veröffentlichungstag und Bekanntmachung des Hinweises auf die Patenterteilung: **16.03.2016**
(21) Anmeldenummer: 10182811.9
(22) Anmeldetag: 29.09.2010
(51) Int. Cl.: A61C 8/00

(54) **Dentalimplantatsystem**
Dental implant system
Système d'implant dentaire

(43) Veröffentlichungstag der Anmeldung: 04.04.2012
(73) Patentinhaber: Ivoclar Vivadent AG, 9494 Schaan (LI)
(72) Erfinder: Ospelt, Armin, 9490 Vaduz (LI); Ganley, Robert, Williamsville, NY 14221 (US); Kappert, Heinrich, Prof. Dr., 9490 Vaduz (LI)
(74) Vertreter: Splanemann

(56) Entgegenhaltungen:
- WO-A1-2010/088754
- US-A- 5 281 140
- US-A- 6 012 923
- US-B1- 6 168 436

## Beschreibung

Die Erfindung betrifft ein Dentalimplantatsystem, gemäß dem Oberbegriff von Anspruch 1.

Es ist seit langem bekannt, dass durch Dentalimplantatsysteme Dentalrestaurationen geschaffen werden können, die Nachbarzähne nicht beeinträchtigen. Hierzu weist das Dentalimplantatsystem typischerweise als Basis ein Dentalimplantat auf. Das Dentalimplantat wird in den Kieferknochen geschraubt und bietet eine sichere Verankerung für das Dentalimplantatsystem im übrigen.

Das Dentalimplantatsystem weist zur Ausbildung der Dentafrestauration über das eigentliche Dentalimplantat hinausgehend auch ein Dentalrestaurationsteil auf, dessen Ausbildungsform typischerweise dem oder den Nachbarzähnen des Patienten entspricht.

Für die Verankerung zwischen dem Dentalrestaurationsteil und dem Dentalimplantats ist es bekannt, ein oder zwei Formteile einzusetzen, die für die Verbindung sorgen sollen. Das dem Dentalimplantat benachbarte Formteil wird als Konnektor bezeichnet und ist meist formschlüssig mit dem Dentalimplantat verbunden. An den Konnektor schließt sich entweder das Dentalrestaurationsteil unmittelbar an, oder ein sogenanntes Abutment erstreckt sich zwischen dem Konnektor und dem Dentalrestaurationsteil. Das Abutment weist häufig einen kegelstumpfförmigen oder konischen Aufbau auf, um die eingeleiteten Kaukräfte großflächig aufnehmen und verteilen zu können, ohne dass es zu punktuellen Belastungen des Dentalrestaurationsteils kommen würde.

Für die Verbindung zwischen dem Konnektor und dem Dentalimplantats ist es bekannt geworden, eine Durchgangsbohrung in dem Konnektor vorzusehen und diese mit einer Schraube zu durchsetzen, wobei die Schraube dann in eine entsprechende Gewindebohrung des Dentalimplantats eingeschraubt wird, um dort für einen festen Sitz des Konnektors zu sorgen.

Es ist vorgeschlagen worden, den in das Dentalimplantat hineinragenden Abschnitt des Konnektors ebenfalls kegelstumpfförmig auszugestalten, um den Sitz des Konnektors im Dentalimplantat noch weiter zu verbessern. Diese Lösung ergibt allerdings eine schlechte Lösbarkeit, wenn der Konnektor einmal entfernt werden muss, denn er neigt gerade bei geringer Konusneigung dann dazu, sich dort festzusetzen.

Dentalimplantatsysteme erfahren grundsätzlich eine zunehmende Verbreitung. Die Ursache hierfür ist mindestens zum Teil darin begründet, dass - gerade jüngere - Patienten es häufig ablehnen, für die Bereitstellung eines Zahnersatzes die natürliche und gesunde Zahnsubstanz von Nachbarzähnen zu schädigen und zu entfernen, wie es für die Bereitstellung einer Brücke erforderlich ist. Gerade jüngere Patienten ziehen daher die Bereitstellung eines Dentalimplantatsystems eher vor.

Die Realisierung derartiger Dentalimplantatsysteme bereits im mittleren oder sogar jüngeren Alter bedingt andererseits, dass die Ansprüche an die Haltbarkeit und sowohl funktionale als auch optische Verträglichkeit von Dentalimplantatsystemen zunehmend gestiegen sind. Dies bedeutet zum einen, dass bei einer etwaigen Verfärbung der Wunsch besteht, das Dentalrestaurationsteil gegebenenfalls austauschen zu können, ohne eine erneute Knochenverletzung herbeizuführen. Andererseits bedeuten die gestiegenen Ansprüche an die Tragedauer, dass die Belastbarkeit des gesamten Implantatsystems - gerade auch bei intensiven Wechsellasten, wie sie beim Kauen auftreten - hoch sein muss.

Andererseits fallen Dentalimplantatsysteme durch die gestiegene Verbreitung auch kostenmäßig stärker ins Gewicht, so dass der Wunsch besteht, eine möglichst günstige Herstellung einerseits und Haltbarkeit andererseits zu ermöglichen, wobei dennoch ästhetische Gesichtspunkte nicht ignoriert werden dürfen. Aus der US 2004/0076924 A1 ist ein Dentalimplantatsystem mit einem zweiteiligen Abutment bekannt, bei dem der untere Teil praktisch wie ein Konnektor wirkt. Diese Lösung ermöglicht durch den Formschluss zwischen Konnektor und Dentalimplantats zwar eine drehfeste Verankerung. Der Konnektor wird jedoch gerade bei Wechsellast recht stark beansprucht, so dass er ausleiern oder brechen kann. Auch ist die ästhetische Anmutung gerade bei Zahnfleischschwund nicht besonders gut.

Aus der US 6,012,923 ist ein zweiteiliges Abutment bekannt. Dieses Abutment weist eine Manschette auf, die von einem oberen Abschnitt enifernbar ist, wobei die Manschette aus einem anderen Material hergestellt ist als der obere Abschnitt.

Demgegenüber liegt der Erfindung die Aufgabe zugrunde, ein Dentalimplantatsystem gemäß dem Oberbegriff von Anspruch 1 zu schaffen, das hinsichtlich der ästhetischen Anmutung auch langfristig betrachtet verbessert ist, ohne dass die Herstellungskosten besonders groß wären, wobei dennoch eine sichere und dauerhafte Befestigung des Dentalrestaurationsteils möglich ist.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass durch die Erstreckung des Konnektors mindestens teilweise in das Dentalimplantat hinein der Konnektor seibst geschützt ist und daher weniger belastet ist. Durch die an sich bekannte Schraube, die sich durch den Konnektor hindurcherstreckt, wird er auf Druck belastet. Dies erlaubt es in überraschend einfacher Weise, ihn auch aus einem ästhetisch ansprechenderem Material als Metall herzustellen, beispielsweise aus Zirkondioxid, aus einem Komposit oder aus Kunststoff, mindestens in seinem Aussenumfang, der als Bund bezeichnet wird. Diese Lösung hat sich beim Stand der Technik verboten, denn die starke Beanspruchung durch Wechsellasten würde beim Stand der Technik zu Sprödbrüchen des Konnektors führen.

Zwar ist die Verwendung, von Zirkondioxid oder einem anderen Keramikmaterial für Abutments an sich längst bekannt. Dies hat jedoch nichts mit dem Material für den Konnektor zu tun, denn der Konnektor ist typischerweise ein reines mechanisches Kraftaufnahmeelement, dass der Abstützung und Lagerung des Dentalimplantatsystems im übrigen Im oder am DentaliImplantat dient, und typischerweise kommt das Abutment bereits bei der Implantation oberhalb des Zahnfleischsaumes zu liegen, so dass dort oben ästhetische Gesichtspunkte stets eine Rolle spielen, abgesehen davon, dass ein metallisches Abut2ment den bei Dentalrestaurationsteilen üblicherweise gewünschten Effekt der Transluzenz durch das durchscheinende Metall zunichte machen wurde.

Erfindungsgemäß besonders günstig ist es, dass auch bei Zahnfleischschwund, beispielsweise üben 30 Jahre, nicht zu befürchten ist, dass ästhetische Nachteile durch den Konnektor entstehen. Das Dentalimplantat ist üblicherweise vollständig in den Kieferknochen eingeschraubt und erstreckt sich als Bonelevel-Implantat nicht über den Kieferknochen. hinaus. Anschließend hieran ist der Bund des Konnektors erfindungsgemäß vorgesehen, der bevorzugt Zahnfleisch- oder Zahnfarbe hat, so dass er optisch nicht stört.

Dannach läßt sich in erfindungsgemäß besonders günstiger Weise die sichere Verankerung anischen Dentalimplantat einerseits und Abutment und/oder Dentalrestaurationsteil andererseits sicherstellen, zumal der Realisierung des Konnektors aus Keramik oder Komposit nicht entgegensteht, dass Formschlusselemente am Aussenumfang des Konnektors vorgesehen sein können, die mit Formschlusselementen des Dentalimplantats zusammenwirken und eine drehfeste Lagerung gewährleisten.

Erfindungsgemäß besonders günstig ist es, wenn sich anstelle von konischen Abschnitten zylindrische Abschnitte beidseitig des Bundes des Konnektors erstrecken. Hierdurch ist ausgeschlossen, dass es zu einem Festsitzen kommt, so dass die Lösbarkeit auch nach Jahren ohne weiteres gewährleistet ist. Die Konizität lässt sich durch eine zweistufige Ausgestaltung des oberen Abschnitt des Konnektors simulieren, der dann durch zwei aufeinander folgende zylindrische Abschnitte gebildet ist, deren Durchmesser nach obenhin betrachtet abnimmt.

Besonders günstig ist es, wenn der zweite Abschnitt des Konnektors eine von einer runden Form abweichende Aussengeometrie aufweist. Hierdurch ist eine sichere und formtreue Lagerung des Konnektors in dem Dentalimplantat möglich. Es ist jedoch auch möglich, eine runde Aussengeometrie zu verwenden, um so leichter minimale Justierungen in Drehrichtung zu ermöglichen, wobei dann die Winkelstellung des Konnektors - und damit der Krone - durch die Position festgelegt ist, die durch die Schraube, die den Konnektor durchtritt, fixiert wird.

### [Hieran schließen sich die Vorteile der Unteransprüche au.]

Weitere Vorteile, Einzelheiten und Merkmale ergeben sich aus der nachfolgenden Beschreibung eines Ausführungsbeispiels an, anhand der Zeichnung.

Es zeigen:
- Fig. 1: eine schematische Ansicht einer Ausführungsform eines erfindungsgemäßen Dentalimplantatsystems, vor der Montage;
- Fig. 2: eine weitere Ausführung eines erfindungsgemäßen Dentalimplantatsystems;
- Fig. 3: eine weitere Ausführung eines erfindungsgemäßen Dentalimplantatsystems;
- Fig. 4: eine weitere Ausführung eines erfindungsgemäßen Dentalimplantatsystems;
- Fig. 5: eine weitere Ausführung eines erfindungsgemäßen Dentalimplantatsystems;
- Fig. 6: eine weitere Ausführung eines erfindungsgemäßen Dentalimplantatsystems;
- Fig. 7: eine schematische Ansicht eines Details eines erfindungsgemäßen Dentalimplantatsystems in einer Ausführungsform, nämlich des Bundes des Konnek tors;
- Fig. 8: eine modifizierte Ausführungsform der Ansicht gemäß Fig. 7;
- Fig. 9: eine weitere modifizierte Ausführungsform der Ansicht gemäß Fig. 7; und
- Fig. 10: eine weitere modifizierte Ausführungsform der Ansicht gemäß Fig. 7

Die einzige Figur der Zeichnung eine schematische Ansicht einer Ausführungsform eines erfindungsgemäßen Dentalimplantatsystems.

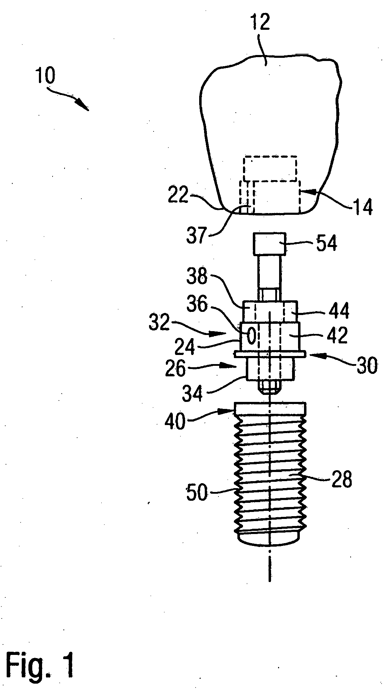

Das in der Fig. 1 dargestellte Dentalimplantatsystem 10 weist, wie aus der schematischen Darstellung ersichtlich ist, ein Dentalrestaurationsteil 12 auf. Das Dentalrestaurationsteil 12 kann beispielsweise die Form eines künstlichen Schneidezahns in seinem freiliegenden Bereich haben, wie es aus Figur 1 ersichtlich ist. Das Dentalrestaurationsteil weist in an sich bekannter Weise eine Ausnehmung 14 auf.

Erfindungsgemäß ist ein Konnektor 24 vorgesehen, der eine besondere Form und einen besonderen Aufbau aufweist. Der Konnektor 24 ist grundsätzlich dreigeteilt. Er weist einen ersten Abschnitt 26 auf, der für das Hineinragen in ein Dentalimplantat 28 geeignet geformt ist, einen Bund 30, sowie einen zweiten Abschnitt 32. Sämtliche 3 Teile sind je zylinderförmig und erfindungsgemäß bevorzugt dementsprechend nicht konisch ausgebildet, weisen jedoch Besonderheiten auf. Der Konnektor kann aus Zirkondioxid, Titan, Glaskeramik, aus einem Komposit oder aus Kunststoff bestehen.

Der erste Abschnitt 26 weist Formschlusselemente 34 auf, die dem dortigen Zylinder eine unrunde Aussenform geben. Die Formschlusselemente 34 passen genau in entsprechende Ausnehmungen in dem Dentalimplantat 28. Beim Einsetzen des Konnektors 24 in das Dentalimplantat 28 kommt der Bund 30 mit seiner unteren ersten Anschlussfläche auf der Oberseite des Dentalimplantats 28 zu liegen. Der Aussendurchmesser des Bundes 30 entspricht dem Aussendurchmesser des Dentalimplantats an seinem Anschluß 40. Damit ist ein bündiger Übergang zwischen dem Bund 30 und dem Anschluß 40 möglich.

Der Konnektor 24 besteht mindestens im Bereich des Bundes 30 oder dessen Aussenseite aus einem Material, das entweder zahnfarben oder zahnfleischfarben ist. Bevorzugt besteht der Konnektor 24 insgesamt aus einem Keramikmaterial wie Zirkondioxid, es ist aber auch möglich, ihn aus Komposit, Kunststoff oder Titan herzustellen, wobei gerade im letzteren Falle dann der Aussenbereich des Bundes 30 mit Zahnfarbe oder mit Zahnfleischfarbe versehen ist.

Der zweite Abschnitt 32 des Konnektors 24 ist seinerseits zweigeteilt. Er weist einen ersten zylindrischen Abschnitt 42 und einen zweiten zylindrischen Abschnitt 44 auf. Der erste zylindrische Abschnitt 42 weist einen größeren Durchmesser als der zweite zylindrische Abschnitt 44 auf. Betrachtet man die Durchmesserabfolge von Bund 30, erstem zylindrischem Abschnitt 42 und zweitem zylindrischem Abschnitt 44, entsteht trotz der Verwendung von einzelnen Zylinder gleichsam ein simulierter Konus.

Damit passt der Konnektor 24 in seinem ersten Abschnitt 26 ohne weiteres in eine entsprechende Ausnehmung 24 in dem Dentalrestaurationsteil 12 und liegt dort bündig an.

Zur Fixierung der Winkelposition sind zwei einander gegenüberliegende Formschlusselemente 36 und 37 in der Ausnehmung 14 und an dem zweiten Abschnitt 32 vorgesehen.

Das bündige Anliegen bedeutet andererseits, dass der Durchmesser des Bundes 30 dem Durchmesser des unteren Endes 22 des Dentalrestaurationsteils 12 entspricht. Der Durchmesser des Bundes 30, der in dem in Fig. 1 dargestellten Ausführungsbeispiel zylindrisch ausgebildet ist, entspricht zugleich auch dem oberen Durchmesser des Dentalimplantats 28 an seinem Anschluss 40.

In an sich bekannter Weise weist das Dentalimplantat 28 an seinem Aussenumfang ein Gewinde 50 auf, das der Verankerung im Kieferknochen dient.

Für die Bereitstellung des erfindungsgemäßen Dentalimplantatsystems 10 wird nun in ebenfalls an sich bekannter Weise zunächst das Dentalimplantat 28 mit dem Gewinde 50 in den Kieferknochen eingebracht. Dies geschieht beispielsweise über einen Schraubenschlüssel, der an seinem Ende mit Formschlusselementen endet, die den formschlusselementen 34 des Konnektors 24 entsprechen.

Das Dentalimplantat 28 weist unterhalb dieser Formschlussausnehmungen ein Innengswinde auf. Das Innengewinde passt zum Aussengewinde einer Schraube 52. Die Schraube 52 ist so ausgebildet, dass sie eine Durchgangsbohrung 58 in dem Konnektor 24 durchtritt. Nach Befestigung des Dentalimplantats 28 wird nun die Schraube 52 durch den Konnektor 24 hindurchgesteckt. In dem Ausführungsbeispiel gemäß Fig. 1 wird die Schraube 52 in das Innengewinde des Dentalimplantats 28 eingeschraubt, so dass sie mit ihrem Schraubenkopf 54 auf dem zweiten Abschnitt 32 des Konnektors 24, gegebenenfalls in einer an sich bekannten Vertiefung, aufliegt und den Konnektor 24 sicher und insbesondere drehfest in dem Dentalimplantat 28 hält.

Anschließend hieran wird das Dentalrestaurationsteil 12, in dem dargestellten Ausführungsbeispiel also die entsprechende Krone, mit der Ausnehmung 14 auf die so gebildete Einheit aus Schraube 52 und Konnektor 24 aufgestülpt und dort in geeigneter Weise befestigt, beispielsweise durch Verlöten oder Verkleben.

Bei der Ausführungsform gemäß Fig. 1 ist es vorgesehen, das Dentalimplantatsystem oder das Dentalrestaurationssystem ohne Abutment zu realisieren und den Konnektor 24 mit seinem zweiten Abschnitt 32 unmittelbar in die Ausnehmung 14 des Dentalrestaurationsteils 12 eintreten zu lassen, wobei es sich versteht, dass dann die Ausnehmung 14 entsprechend geformt sein muss.

Erfindungsgemäß günstig ist es, wenn dann der Konnektor 24 aus einem transluzenten Material wie Zirkondioxid besteht. Überraschend ist es nicht notwendig, für den Konnektor ein Material wie Titan zu verwenden, was wohl darauf zurückzuführen ist, dass der Konnektor 24 mit seinem ersten Abschnitt 26 sicher in dem Dentalrestaurationsteil 12, das beispielsweise auch aus Titan bestehen kann, aufgenommen ist.

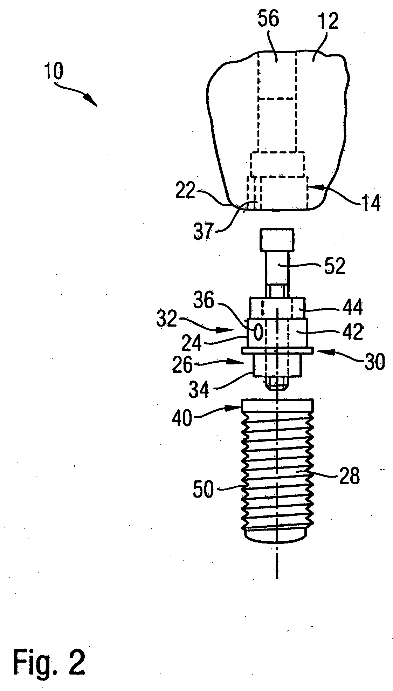

Gemäß Fig. 2 ist es vorgesehen, ein Dentalimplantatsystem ebenfalls ohne Abutment 16 zu realisieren. Diese Ausführungsform unterscheidet sich von der Ausführungsform gemäß Fig. 1 dadurch, dass die Krone 12 eine Durchtrittsausnehmung 56 aufweist, die sich zwischen ihrer Oberseite und der Ausnehmung 14 erstreckt. Die Durchtrittsausnehmung 56 weist einen Durchmesser auf, der geeignet ist, ein Werkzeug für das Einschrauben oder Lösen der Schraube 52 aufzunehmen, wobei der Durchmesser jedoch nicht wesentlich größer als der betreffende Schaft des Werkzeugs gewählt ist. Die Durchtrittsausnehmung 56 wird nach Festziehen der Schraube 52 mit einer geeigneten Füllmasse in an sich bekannter Weise verschlossen, wobei bevorzugt die Durchtrittsausnehmung 56 nicht an einer labialen, sondern an einer lingualen Seite eines Frontzahns endet.

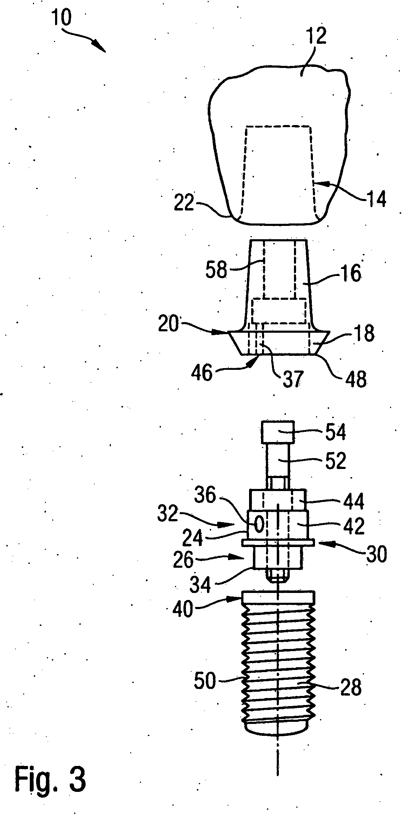

Die Ausführungsform gemäß Fig. 3 unterscheidet sich von der Ausführungsform gemäß Fig. 1 und Fig. 2 dadurch, dass ein Abutment 16 vorgesehen ist. Die Ausnehmung 14 ist dementsprechend anders ausgebildet.

In die Ausnehmung 14 passt das Abutment 16, dass entsprechend der Form der Ausnehmung 14 gestaltet ist und beispielsweise leicht konisch verläuft.

In dem späteren fertigen Zustand sind das Abutment 16 und das Dentalrestaurationsteil 12 über ein geeignetes Medium wie beispielsweise Zahnzement miteinander verbunden. Das Abutment 16 besteht wie das Dentalrestaurationsteil aus Keramik, bevorzugt jedoch aus einer recht festen Keramik wie Zirkondioxid, während für das Dentalrestaurationsteil 12 beispielsweise eine Lithiumdisilikatkeramik eingesetzt werden kann, oder beispielsweise Kunststoff oder ein Komposit.

In an sich bekannter Weise weist das Abutment 16 in seinem unteren Bereich einen Anschlusskonus 18 auf. Der Anschlusskonus 18 hat an seinem oberen Ende 20 einen Durchmesser, der dem Durchmesser des unteren Endes 22 des Dentalrestaurationsteils 12 entspricht, so dass dort ein bündiger Übergang gegeben ist.

Auch wenn die verbleibende Wandstärke des Abutment 16 die Ausnehmung 46 umgebend recht gering dargestellt ist, versteht es sich, dass in der Praxis diese Wandstärke in weiten Bereichen an die Erfordernisse anpassbar ist, um die gewünschte Festigkeit und Sicherheit zu gewährleisten.

Für die Aufnahme der Schraube 52 ist in dem Abutment 16 eine Durchtrittsausnehmung 58 vorgesehen. Bei der Ausführungsform gemäß Fig. 3 ist die Ausnehmung 58 etwas größer als der Schraubenkopf 54, so dass die Schraube 52 frei durch das Abutment 16 hindurchsteckbar ist. Für die Montage wird der Konnektor 24 in die Ausnehmung 46 des Abutment 16 eingeführt und die Einheit aus Schraube 52 und Konnektor 24 über die Schraube 52 an dem Dentalimplantat 28 befestigt. Erfindungsgemäß ist es günstig, dass durch Lösen der Schraube 52 diese Verbindung wieder gelöst werden kann, wenn dies erwünscht ist. Anschließend hieran wird in an sich bekannter Weise das Dentalrestaurationsteil 12 auf das Abutment 16 aufgebracht. Bevorzugt ist zuvor das Abutment 16 auf die vorstehende Einheit aufgeklebt worden.

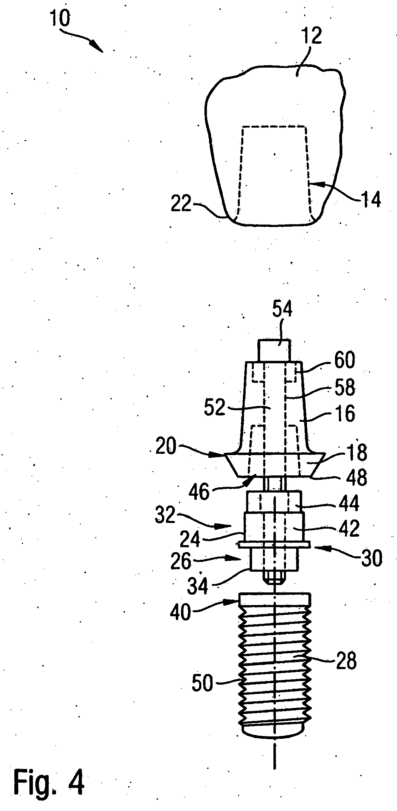

Bei der Ausführungsform gemäß Fig. 4 ist es vorgesehen, dass das Abutment 16 eine Durchgangsbohrung 58 aufweist, deren Durchmesseer etwas größer als der Schaft der Schraube 52 ist, jedoch kleiner als der Durchmesser des Schraubenkopfes 54. Bei dieser Ausführungsform hält damit die Schraube 52 auch das Abutment 16, so dass sich eine vormontierte feste Einheit aus Dentalimplantat 28, Konnektor 24, Abutment 16 und Schraube 52 ergibt, auf die dann die Krone 12 aufgeklebt werden kann.

Für die Aufnahme des Schraubenkopfes 54 ist anschließend an die Durchgangsbohrung 58 oben in dem Abutment 16 eine etwas vergrößerte Ausnehmung 60 vorgesehen, so dass der Schraubenkopf 54 versenkt in dem Abutment 16 aufgenommen werden kann.

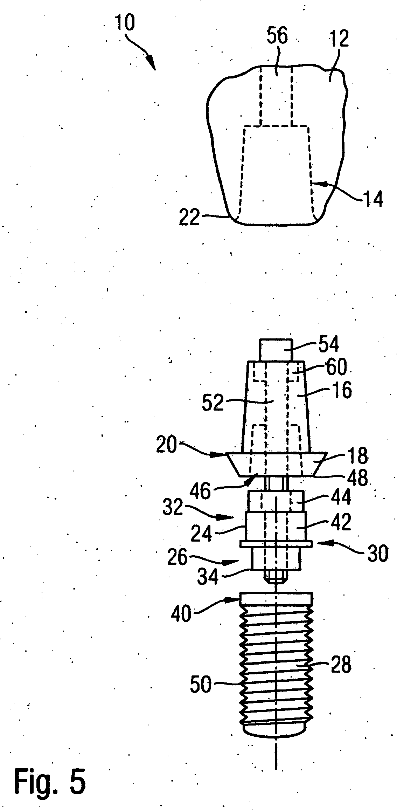

Die Ausführungform gemäß Fig. 5 stellt im Grunde eine Kombination der Ausführungsformen gemäß Fig. 2 und gemäß Fig. 4 dar. Im Unterschied zu der Ausführungsform gemäß Fig. 4 ist hier eine Durchtrittsausnehmung 56 vorgesehen, die die Krone 12 durchtritt und die Einführung eines Werkzeugs für den Schraubenkopf 54 ermöglicht.

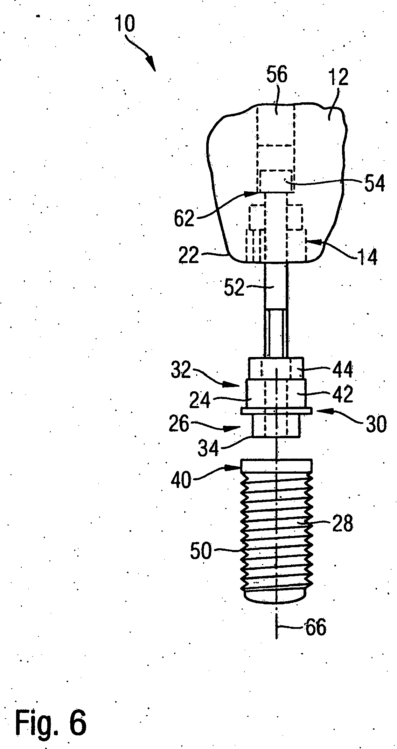

Eine weiter modifizierte Ausführungsform ist aus Fig. 6 ersichtlich. Bei dieser Ausführungsform ist kein Abutment 16 vorgesehen, vielmehr ist der Konnektor 24 unmittelbar in der Ausnehmung 14 der Krone 12 aufgenommen. Die Krone 12 weist eine Durchgangsbohrung 56 auf, die den Schraubenkopf 54 in ihrem oberen Bereich aufnimmt. Deutlich oberhalb der Ausnehmung 14 ist die Durchtrittsbohrung 56 jedoch in ihrem Durchmesser vermindert, so dass der Durchmesser dort kleiner als der Durchmesser des Schraubenkopfes 54, jedoch größer als der Durchmesser des Schafts der Schraube 52 ist. Hierdurch liegt der Schraubkopf 54 auf einer Anschlagfläche 62 innerhalb der Krone 12 auf, so dass durch das Festziehen der Schraube 52 die Einheit aus Krone oder Dentalrestaurationsteil 12, Schraube 52, Konnektor 24 und Dentalimplantat 28 verschraubt wird. Es versteht sich, dass die Anschlagfläche 56 auch deutlich größer gewählt sein kann als dies in Fig. 6 dargestellt ist und dass auch deutlich mehr Material für die Abstützung des Schraubenkopfes 54 in der Krone 12 vorgesehen sein kann.

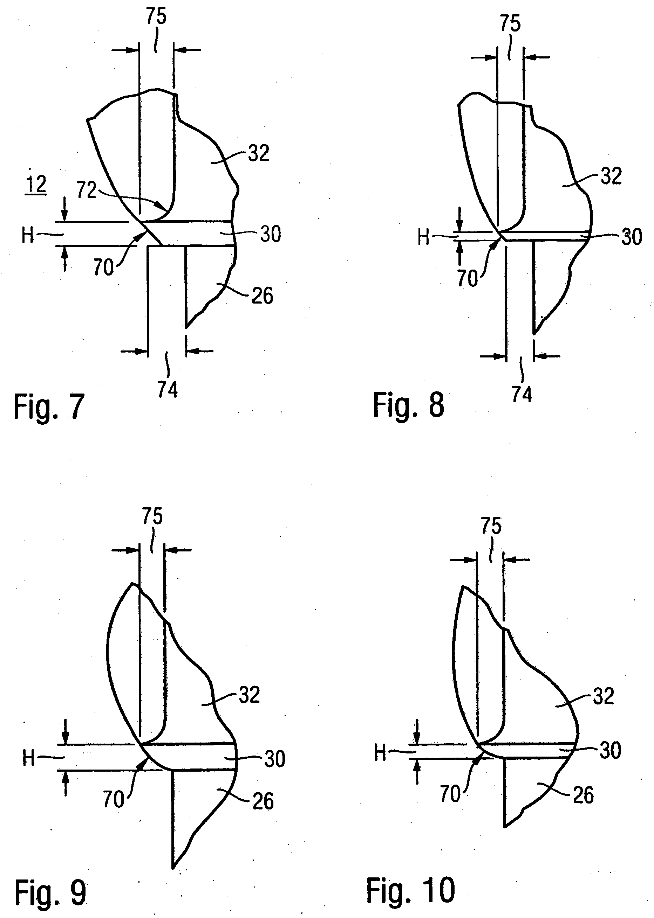

In den Ausführungsformen gemäß den Fig. 1 bis Fig. 6 ist erfindungsgemäß der Bund 30 des Konnektors 24 flachzylindrisch ausgebildet, hat also eine Aussenfläche, die sich parallel zu einer Achse 66 des Dentalimplantatsystems 10 erstreckt. Es versteht sich, dass erfindungsgemäß ein bündiger Übergang des Bundes 30, insbesondere zum Abtment 16 oder zur Krone 12 erwünscht ist, und insbesondere auch zum Dentalimplantat 28. In den Fig. 7 bis 10 sind hierzu geeignete Ausgestaltungen des Aussenumfangs des Bundes 30 dargestellt. Bei der Ausführungsformgemäß Fig. 7 ist der Bund 30 seiner Aussenfläche 70 hierzu konisch ausgebildet. Der Konnektor 24 hat an seinem ersten Abschnitt 26 einen größeren Aussendurchmesser als an seinem zweiten Abschnitt 32; gegenüber beiden Abschnitten springt jedoch der Bund 30 deutlich vor. Die Vorsprungmaße 74 und 75 sind bei dieser Ausführungsform jedoch etwa gleich, da der Konuswinkel der Aussenfläche 70 recht groß gewählt ist und beispielsweise etwa 45 Grad beträgt und da die Höhe H des Bundes 30 etwa dem Vorsprungmaß entspricht. Bevorzugt entspricht sie einem Zehntel bis einem Drittel des Durchmessers des Bundes 30.

In Fig. 7 ist die Aufnahme des ersten Abschnitts 26 in einer Krone 12 dargestellt. Es versteht sich, dass in gleicher Weise aber auch die Aufnahme in einem Abutment 16 mit einem Anschlusskonus 18 vorgesehen sein kann, wie es in den Fig. 3, Fig. 4 und Fig. 5 dargestellt ist.

Erfindungsgemäß besonders günstig ist es, wenn der Übergang zwischen dem ersten Abschnitt 26 und dem Bund 30 ausgerundet ist. Gemäß Fig. 7 ist dort eine Ausrundung 72 mit einem Radius vorgesehen, der etwa dem Vorsprungmaß 74 entspricht.

Gemäß Fig. 8 ist eine weitere Ausführungsform des Konnektors 24 dargestellt. Bei dieser Ausführungsform weist der Bund 30 eine deutlich geringere Höhe H auf, verglichen mit der Ausführungsform gemäß Fig. 7. Sie beträgt etwa ein Drittel dieser und damit auch ein Drittel der Größe des Vorsprungmaßes 74.

Eine weitere Ausführungsform eines Konnektors 24 ist in Fig. 7 dargestellt. Bei dieser Ausführungsform ist der Bund 30 an seiner Aussenfläche 70 ballig oder konvex ausgebildet, im Grunde in Verlängerung der Konvexität 80 der Krone 12 an ihrer Aussenseite. Der Bund 30 geht auch hier mit einer Ausrundung 72 zum ersten Abschnitt 26 über. Durch die Balligkeit geht er an seinem unteren Ende jedoch praktisch übergangslos in den zweiten Abschnitt 32 über. Die Aussenfläche 70 des Bundes 30 ist bei dieser Ausführungsform noch etwas stärker geneigt als bei den Ausführungsformen gemäß Fig. 7 und Fig. 8; der durchschnittliche Neigungswinkel gegenüberder Achse 66 (vergl. Fig. 6) beträgt etwa 60 Grad.

Eine noch stärkere Neigung der Aussenfläche 70 des Bundes 30 des Konnektors 24 ist aus Fig. 10 ersichtlich. Bei dieser Ausführungsform ist auch die Höhe H des Bundes 30 geringer, etwa halb so groß wie die Höhe H des Bundes bei den Ausführungsformen gemäß den Fig. 7 und 9. Dies bedingt einen noch steileren Neigungswinkel der Aussenfläche 70 gegenüber der Achse 66 gemäß Fig. 6, der in dem dargestellten Ausführungsbeispiel etwa 70 Grad beträgt.

Bei einer modifizierten Ausgestaltung der Erfindung ist es vorgesehen, die den Aufbau des zweiten Abschnitts 32 zu optimieren. In einer insofern gesehenen primären Ausführungsform erstreckt sich der Konnektor 24 in seinem 2. Abschnitt 32 mindestens teilweise konisch zulaufend. Alternativ ist er stufenförmig verjüngt. In einer weiteren besonders bevorzugten Ausführungsform ist der zweite Abschnitt 32 gegenüber der Garstellung in den Fig. deutlich verlängert. Er erstreckt sich in einer Höhe, die mindestens dem 0,4-fachen des Dentalrestaurationsteils 12 entspricht, oder aber auch in einer größeren Höhe als sie das Dentalrestaurationsteil 12 hat. Bei dieser Lösung lässt sich dann der Abschnitt 32 auf die Erfordernisse kürzen, bevor das Dentalrestaurationsteil aufgesteckt wird. Diese Ausführungsform hat den Vorteil, dass die Kosten der Lagerhaltung deutlich reduziert sind. Der Konnektor 24 muss lediglich in einer einzeigen Höhe vorgehalten werden, auch wenn Zahnhöhen ganz unterschiedlicher Provenienz abgedeckt werden sollen.

Um der gesamten Dentalrestauration eine besonders gute Stütze zu verleihen, ist es auch denkbar, dass der zweite Abschnitt das Dentalrestaurationsteil im Bereich der Kaufläche durchsetzt. Er wird dann nach dem Aufstecken des Dentalrestaurationsteiles 12 - gegebenenfalls mit Abutment 16 - auf die erforderliche Länge gekürzt sowie verschlossen und bildet ein Teil der Kaufläche.

## Patentansprüche

1. Dentalimplantationssystem mit einem Dentalimplantat (28), einem Dentalrestaurationsteil, einem Konnektor (24) mit einer zentralen Durchgangsbohrung (38) sowie einem umlaufenden, radial abragenden Bund (30) und einer die Durchgangsbohrung (38) durchsetzenden Schraube (52) mit der zumindest der Konnektor (24) fest mit dem Dentalimplantat (28) verbindbar ist, wobei zumindest die Farbe des Bundes (30) insbesondere die Farbe des Konnektors (24), wenigstens einer Zahnfarbe oder einer Zahnfleischfarbe entspricht, und ein sich an den Bund (30) anschließender erster Abschnitt (26) des Konnektors (24) sich in das Dentalimplantats (28) hinein sowie ein sich an den Bund (30) anschließender, zweiter Abschnitt (32) des Konnektors (24) sich in das Dentalrestaurationsteil hinein erstreckt, wobei der zweite Abschnitt (32) des Konnektors (24) zweigeteilt ist und einen ersten zylindrischen Abschnitt (42) und einen zweiten zylindrischen Abschnitt (44) aufweist, wobei der erste zylindrische Abschnitt (42) einen größeren Durchmesser als der zweite zylindrische Abschnitt (44) aufweist.

2. Dentalimplantatsystem nach Anspruch 1, **dadurch gekennzeichnet**, dass-der Konnektor (24) aus dem gleichen Material wie das Dentalrestaurationsteil (12), insbesondere aus Zirkondioxid, Glaskeramik, Titan, aus einem Komposit oder aus Kunststoff, besteht und dass insbesondere der Konnektor (24) und das Dentalrestaurationsteil (12) metallfrei sind und im wesentlichen den gleichen Wärmeausdehnungseffizienten aufweisen.

3. Dentalimplantatsystem nach einem der vorhergehenden Ansprüche, **dadurch gekennzeichnet, dass** der zweite Abschnitt (32) des Konnektors (24) eine von einer runden Form abweichende Aussensymmetrie oder wenigstens einen Vorsprung oder eine Profilierung aufweist, die das Verdrehen des Dentalrestaurationsteiles gegenüber dem Konnektor (24) verhindert.

4. Dentalimplantatsystem nach einem der vorhergehenden Ansprüche, **dadurch gekennzeichnet, dass** die grösste, sich parallel zur Längsachse (66) des Konnektors (24) erstreckende Höhe (H) des Bundes (30) 0,3 mm bis 10 mm, insbesondere 0,5 mm bis 4 mm beträgt.

5. Dentalimplantatsystem nach einem der vorhergehenden Ansprüche, **dadurch gekennzeichnet, dass** der Aussendurchmesser des Bundes (30) in einer zum zweiten Abschnitt (32) des Konnektors (24) verlaufenden Richtung konisch ausgebildet ist.

6. Dentalimplantatsystem nach einem der vorhergehenen Ansprüche, **dadurch gekennzeichnet, dass** der Übergangsbereich zwischen dem Bund (30) und dem zweiten Abschnitt (32) eckig, oder wenigstens teilweise von einem Radius mit 1 mm bis 5 mm und/oder von wenigstens einer konischen, umlaufenden Fläche gebildet ist.

7. Dentalimplantatsystem nach einem der vorhergehenden Ansprüche, **dadurch gekennzeichnet, dass** die äussere Oberfläche des zweiten Abschnittes (32) und/oder wenigstens eine innere Oberfläche des Dentalrestaurationsteils (12) mit einer Oberflächenprofilierung versehen sind, die insbesondere Hinterschnitte aufweist.

8. Dentalimplantatsystem nach einem der vorhergehenden Ansprüche, **dadurch gekennzeichnet, dass** das Dentalrestaurationsteil aus einem Abutment und/oder einer Krone gebildet ist.

9. Dentalimplantatsystem nach einem der vorhergehenden Ansprüche, **dadurch gekennzeichnet, dass** die Befestigung des Konnektors (24) oder des Konnektors (24) und des Abutments (16) oder des Konnektors (24), des Abutments (16) und der Krone (12) an dem Dentalimplantat (28) mit Hilfe einer Schraube (52) erfolgt, wobei sich der Kopf der Schraube an den Konnektor (24) oder dem Abutment (16) oder der Krone (12) abstützt.

10. Dentalimplantatsystem nach einem der vorhergehenden Ansprüche, dadruch gekennzeichnet, dass der Konnektor (24) und das Abutment (16) und/oder das Abutment (16) und die Krone (12) in an sich bekannter Weise durch Kleben oder Verlöten untereinander verbunden sind.

11. Dentalimplantatsystem nach einem der vorhergehenden Ansprüche, **dadurch gekennzeichnet, dass** das Abutment (16) oder die Krone (12), oder das Abutment (16) und die Krone (12), eine zentrale Durchtrittsausnehmung (56) aufweisen, die zumindest teilweise von einem Werkzeug für die Schraube (52) durchsetzbar ist.

12. Dentalimplantatsystem nach einem der vorhergehenden Ansprüche, **dadurch gekennzeichnet, dass** das Abutment (16) aus Zirkondioxid, Glaskeramik, Titan aus einem Komposit oder Kunststoff besteht und der zweite Abschnit (32) des Konnektors (24) und die Krone (12) aus Glaskeramik, Zirkondioxid, aus einem Komposit oder aus Kunststoff besteht.

13. Dentalimplantatsystem nach einem der vorhergehenden Ansprüche, **dadurch gekennzeichnet, dass** wenigstens der Bund (30) des Konnektors (24) mit einer Farbschicht überzogen oder wenigstens teilweise durchgefärbt ist.

14. Dentalimplantatsystem nach einem der vorhergehenden Ansprüche, **dadurch gekennzeichnet, dass** die Aussenfläche (70) des Bundes stufenlos in die Aussenkontur des Abutments (16) oder der Krone (12) übergeht.

15. Dentalimplantatsystem nach einem der vorhergehenden Ansprüche, **dadurch gekennzeichnet, dass** das Zirkonoxid, aus dem der Konnektor (24) hergestellt ist eine Löslichkeit von <100 µg/cm² und/oder eine biaxiale Biegefestigkeit von > 800 MPa und/oder eine Bruchzähigkeit von ≥5 MPa m^{½} besitzt.

## Claims

1. A dental implant system comprising a dental implant (28), a dental restoration part, a connector (24) with a central through-hole (38) and with a circumferential, radially outwardly projecting collar (30) and with a screw (52) passing through the through-hole (38) with the aid of which at least the connector (24) may be fixedly connected to the dental implant (28), wherein at least the color of the collar (30), in particular the color of the connector (24), at least corresponds to a tooth color or a gingival color, and wherein a first portion (26) of the connector (24) that follows the collar (30) extends into the dental implant (28), and a second portion (32) of the connector (24) that follows the collar (30) extends into the dental restoration part, wherein the second portion (32) of the connector (24) is bipartite and comprises a first cylindrical portion (42) and a second cylindrical portion (44), wherein the first cylindrical portion (42) has a larger diameter than the second cylindrical portion (44).

2. The dental implant system as claimed in claim 1, **characterized in that** the connector (24) consists of the same material as the dental restoration part (12), in particular of zirconium dioxide, glass ceramics, titanium, a composite or plastic, and **in that** in particular the connector (24) and the dental restoration part (12) are free of metal and substantially have the same coefficient of thermal expansion.

3. The dental implant system as claimed in one of the preceding claims, **characterized in that** the second portion (32) of the connector (24) comprises an outer symmetry that deviates from a round shape or at least comprises a protrusion or a profiling that prevents the dental restoration part from twisting relative to the connector (24).

4. The dental implant system as claimed in one of the preceding claims **characterized in that** the greatest height (H) of the collar (30) that extends parallel to the longitudinal axis (66) of the connector (24) amounts to 0.3 mm to 10 mm, in particular to 0.5 mm to 4 mm.

5. The dental implant system as claimed in one of the preceding claims, **characterized in that** the outer diameter of the collar (30) is conically shaped in a direction that runs towards the second portion (32) of the connector (24).

6. The dental implant system as claimed In one of the preceding claims, **characterized in that** the transition area between the collar (30) and the second portion (32) is configured in a square-shaped manner, or at least partially having a radius of 1 mm to 5mm and/or having at least a conical, circumferential surface.

7. The dental implant system as claimed in one of the preceding claims, **characterized in that** the outer surface of the second portion (32) and/or at least one inner surface of the dental restoration part (12) is provided with a surface profiling that in particular comprises undercuts.

8. The dental implant system as claimed in one of the preceding claims, **characterized in that** the dental restoration part is made up of an abutment and/or a crown.

9. The dental implant system as claimed in one of the preceding claims, **characterized in that** the mounting of the connector (24), or of the connector (24) and the abutment (16), or of the connector (24), the abutment (16) and the crown (12) on the dental implant (28) is effected by means of a screw (52), wherein the head of the screw is supported on the connector (24) or the abutment (16) or the crown (12).

10. The dental implant system as claimed in one of the preceding claims, **characterized in that** the connector (24) and the abutment (16) and/or the abutment (16) and the crown (12) are connected with one another in a manner known per se by gluing or soldering.

11. The dental implant system as claimed in one of the preceding claims, **characterized in that** the abutment (16) or the crown (12), or the abutment (16) and the crown (12) comprise a central pass-through recess (56) through which a tool for the screw (52) may at least partially pass through.

12. The dental implant system as claimed in one of the preceding claims, **characterized in that** the abutment (16) consists of zirconium dioxide, glass ceramics, titanium, a composite or plastic, and **in that** the second portion (32) of the connector (24) and the crown (12) consist of glass ceramics, zirconium dioxide, a composite or plastic.

13. the dental implant system as claimed in one of the preceding claims, **characterized in that** at least the collar (30) of the connector (24) has a thin coating of color or is at least partially dyed through.

14. The dental implant system as claimed in one of the preceding claims, **characterized in that** the outer surface (70) of the collar smoothly merges with the outer contour of the abutment (16) or the crown (12).

15. The dental implant system as claimed in one of the preceding claims, **characterized in that** the zirconium dioxide from which the connector (24) is made comprises a solubility of <100µg/cm² and/or a biaxial bending strength of >800 MPa and/or a fracture toughness of ≥5 MPa m^{½}.

## Revendications

1. Système d'implants dentaires avec un implant dentaire (28), une pièce destinée à la restauration dentaire, un connecteur (24) avec un perçage traversant (38) ainsi qu'une collerette (30) circonférentielle, radialement en saillie et une vis (52) paissant travers le perçage traversant, (38), où au moins le connecteur (24), peut être fermement connecté à l'implant dentaire (28), où au moins la couleur de la collerette 30) en particulier la coupleur du connecteur (24), correspond à au moins une teinte de dent ou une teinte de gencive et une première section (26) du connecteur (24) attachée à la collerette (30) s'étend dans implant dentaire (28) ainsi que une deuxième section (32) du connecteur (24) attachée à la collerette (30) s'étend dans la pièce destinée à la restauration dentaire, où la deuxième section (32) du connecteur (24) est divisée en deux parties et présente une première section cylindrique (42) et une seconde section cylindrique (44), où la première section cylindrique (42) présente un diamètre supérieur à celui de la deuxième section cylindrique (44).

2. Système d'implants dentaires selon la revendication 1, **caractérisé en ce que** le connecteur (24) se compose de la même matière que la pièce destinée à la restauration dentaire (12), en particulier de la zircone, du vitrocéramique, du titane, d'un composite ou d'un plastique, et qu'en particulier le connecteur (24) et la pièce destinée à la restauration dentaire (12) sont exemptes de métal et présentant essentiellement le même coefficient de dilatation thermique.

3. Système d'implants dentaires selon l'une des revendications précédentes, **caractérisé en ce que** la deuxième section (32) du connecteur (24) présente une symétrie externe non-circulaire ou au moins une faillie ou un profilage, qui empêche la torsion de la pièce de restauration dentaire par rapport au connecteur (24).

4. Système d'implants dentaires selon l'une des revendications précédentes, **caractérisé en ce que** la hauteur (H) la plus importante de la collerette (30), s'étendant parallèle à l'axe longitudinal (66) du connecteur (24) mesure de 0,3 mm à 10 mm, en particulier de 0,5 mm à 4mm.

5. Système d'implants dentaires selon l'une des revendications précédentes, **caractérisé en ce que** le diamètre extérieur de la collerette (30) présente une forme conique dans le sens de la deuxième section (32) du connecteur (24).

6. Système d'implants .dentaires selon l'une des revendications précédentes, **caractérisé en ce que** la zone de transition entre la collerette (30) et la deuxième section (32), est formé carrée ou au moins partiellement par un rayon de 1 mm à 5 mm et/ou au moins une surface conique et circonférentielle.

7. Système d'implants dentaires selon l'une des revendications précédentes, **caractérisé en ce que** la surface extérieure de la deuxième section (32) et/ou au moins une surface intérieure de la pièce destinée à la restauration dentaire (12) sont munies d'une surface de profilage, qui présente en particulier des contre-dépouilles

8. Système d'implants dentaires selon l'une ders revendications précédentes, **caractérisé en ce que** la pièce destinée à la restauration dentaire est formée d'un pilier ou d'une coursonne.

9. Système d'implants dentaires selon l'une des revendications précédentes, **caractérisé en ce que** la fixation du connecteur (24), ou du connecteur (24) et du pilier (16) ou du connecteur (24), du pilier (16) et de la couronne (12) s'effectue sur l'implant dentaire (28) à l'aide d'une vis (52), où la tête de la vis prend appui sur le connecteur (24) ou le pilier (16) ou la couronne (12).

10. Système d'implants dentaires selon l'une des revendications précédentes, **caractérisé en ce que** le connecteur (24) et de le pilier (16) et/ou le pilier (16) et la couronne (12) sont connectés entre eux, de marnière connu en sol, par collage ou soudure.

11. Système d'implants dentaires selon l'une des revendications précédentes, **caractérisé en ce que** le pilier (16) ou la couronne (12) ou le pilier (16) et la coursonne (12), présentent un évidemment de passage centrale (56) qui est au moins partiellement traversable par un outil pour la vis (52).

12. Système d'implants dentaires selon l'une des revendications précédentes, caractérisé que le pilier (16) consisté en zircone, vitrocéramique, titane, d'un composite ou d'un plastique et la deuxième section (32) du connecteur (24) et la couronne (12), se compose de vitrocéramique, zircone, d'un composite ou d'un plastique.

13. Système d'implants dentaires selon l'une des revendications précédentes, **caractérisé en ce que**, au moins la collerette (30) du connecteur (24) est revêtue d'une couche de peinture, ou au moins partiellement teintée dans la

14. Système d'implants dentaires selon l'une des revendications précédentes, **caractérisé en ce que** le passage de la surface extérieure (70) de la collerette dans le contour extérieur des piliers (16) ou de la couronne (12) est continu.

15. Système d'implants dentaires selon l'une des revendications précédentes, **caractérisé en ce que** l'oxyde de zirconium avec lequel le connecteur (24) est fabriqué a une solubilité de 100 µg/cm² ou une résistance à la flexion bi-axiale de 800 MPa et/ou une résistance à la rupture de ? MPa m^{1/2}.
